(19) Europäisches Patentamt
European Patent Office
Office européen des brevets

(11) Veröffentlichungsnummer: **0 399 408**
**A2**

(12) # EUROPÄISCHE PATENTANMELDUNG

(21) Anmeldenummer: **90109517.4**

(22) Anmeldetag: **19.05.90**

(51) Int. Cl.⁵: **H04N 1/32, H04B 1/58, H04B 1/38**

(30) Priorität: **23.05.89 IT 2060089**

(43) Veröffentlichungstag der Anmeldung:
**28.11.90 Patentblatt 90/48**

(84) Benannte Vertragsstaaten:
**AT BE CH DE DK ES FR IT LI NL SE**

(71) Anmelder: **HOECHST AKTIENGESELLSCHAFT**
**Postfach 80 03 20**
**D-6230 Frankfurt am Main 80(DE)**

(72) Erfinder: **Rizzo, Alfonso**
**via Christoforo Colombo n. 14**
**I-20063 Cernusco sul Naviglio (Milano)(IT)**
Erfinder: **Bauer, Klaus-Peter**
**Peter-Weyer-Str. 55**
**D-6500 Mainz-Hechtsheim(DE)**

(54) **Gerät zur Faksimile-Uebertragung.**

(57) Es wird ein Gerät beschrieben, das durch speziell entwickelte Interfaces und Betriebssysteme Informationen an ein Funknetz übertragen kann, das die Daten drahtlos überträgt, so daß die Faksimileübertragung von allen jeweils in Betrieb stehenden Geräten der gleichen Art empfangen wird, und das gleichzeitig auch alle Funktionen eines normalen Geräts zur Faksimileübertragung über das Telefonnetz aufweist.

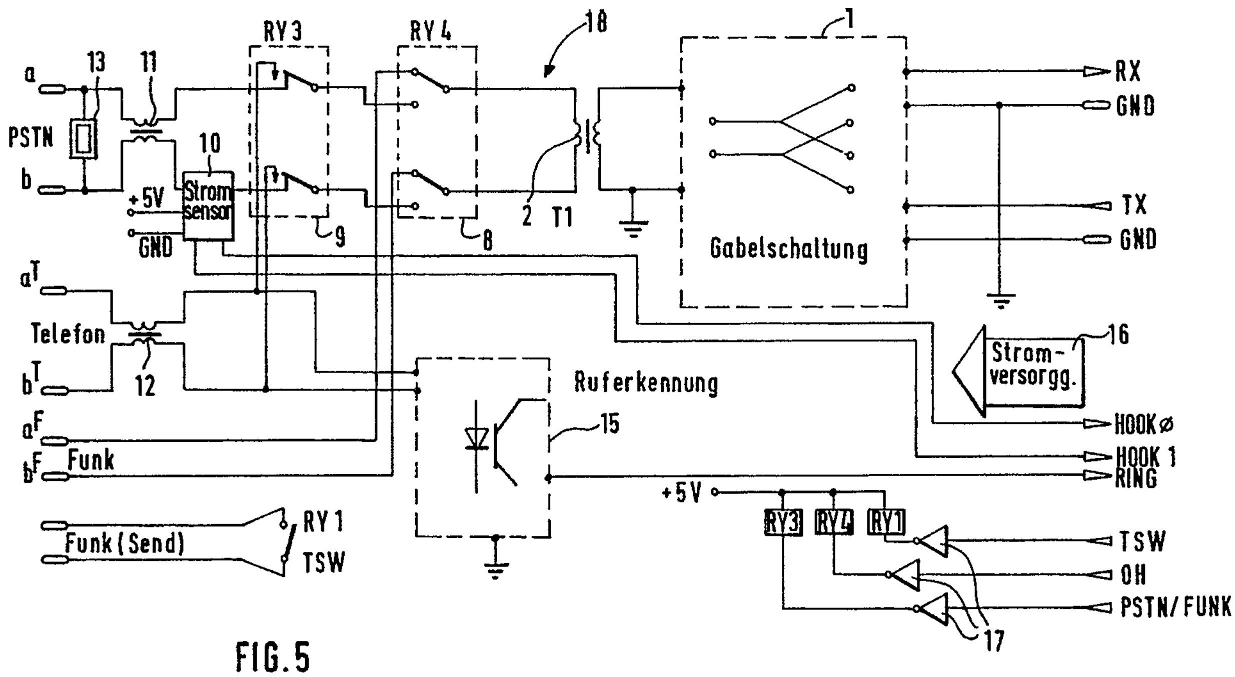


FIG.5

EP 0 399 408 A2

Xerox Copy Centre

# GERÄT ZUR FAKSIMILE-ÜBERTRAGUNG

Die Erfindung betrifft ein Gerät zur Faksimileübertragung, über ein Telefonnetz, mit einer Ruferkennung.

Faksimilegeräte oder Fernkopierer haben schon sehr weite Verbreitung gefunden, wobei die Datenübertragung von einem Fernkopierer zu einem oder zu mehreren Fernkopierern im allgemeinen über das öffentliche Telefonnetz oder ein sonstiges Leiternetz erfolgt.

Alle heute bestehenden Fernkopierer sehen nichts anderes vor als die Übertragung über das Telefonnetz.

Aufgabe der Erfindung ist es, ein Gerät für die Faksimileübertragung so weiterzuentwickeln, daß es nicht nur für die Faksimileübertragung über ein Telefonnetz, ein sonstiges Leiternetz, sondern auch über Funkverbindung geeignet ist.

Zur Losung dieser Aufgabe besteht das Gerät aus einem herkömmlichen Fernkopierer und einer Anschalteinheit, die eine Gabelschaltung zum Umschalten von zwei Leiter auf vier Leiter aufweist. Die weitere Ausgestaltung des Geräts ergibt sich aus den Merkmalen der Unteransprüche.

Ein System zur Faksimileübertragung über Funk an eine beliebige Anzahl von kompatiblen Empfangsgeräten ist bisher noch nicht bekannt geworden.

Zur Herstellung eines Gerätes, das in der Lage ist, eine Funkübertragung zu ermöglichen, müssen verschiedene technische Probleme gelöst werden, darunter vor allem das Problem, zu gewährleisten, daß die Sendung nur von den dazu bestimmten Geräten und nicht durch andere Geräte empfangen werden kann, und daß die Übertragungsgeschwindigkeit über Funk unabhängig von der Übertragungsgeschwindigkeit über das Telefonwählnetz regelbar sein muß.

Alle diese Probleme werden durch das erfindungsgemäße Gerät gelöst, das die Kommunikation mit anderen, ähnlichen Geräten über eine Funkverbindung in Frequenzmodulation sowie die Übertragung über eine Funkverbindung gleichzeitig an mehrere Geräte wie auch an ein einziges ausgewähltes Gerät ermöglicht, und das auch mit allen bisherigen konventionellen Faksimilegeräten zur Übertragung über das Telefonnetz kompatibel ist.

Das erfindungsgemäße Gerät erfüllt die oben aufgeführten Funktionen vor allem dank der Verwendung von zwei speziell entwickelten Schnittstellen, und zwar eine für die Verbindung über Funk und eine für den Anschluß an eine Chiffriermaschine, d.h. einer Vorrichtung, von der die Signale so umgesetzt werden, daß sie nur für die berechtigten Empfänger erkennbar sind.

Der Anwendungsbereich solcher Geräte kann sehr stark ausgedehnt werden, und insbesondere ist die gleichzeitige Versendung der gleichen Botschaft an eine unbegrenzte Zahl von Empfängern möglich. Die Vorteile eines solchen Systems sind enorm und noch nicht in vollem Umfang übersehbar. Man denke zum Beispiel an die Möglichkeit, eine schriftliche Botschaft gleichzeitig in Sekunden oder Minuten an alle Gemeinden, Behörden, alle Polizeistationen oder alle Krankenhäuser im ganzen Land übermitteln zu können.

Einzelheiten des erfindungsgemäßen Gerätes werden im folgenden anhand der Zeichnungen näher erläutert. Es zeigen:

Fig. 1 ein Blockschaltbild einer Gabelschaltung eines Fernkopierers nach der Erfindung mit der Umstellung von vier auf zwei Leiter in der Schaltungsanordnung,

Figur 2 ein Blockschaltbild eines Netzartwahlsystems des Fernkopierers,

Figur 3 eine Darstellung des Zeitablaufs des Kommunikationsprotokolls des Fernkopierers für eine Übertragung über das öffentliche Telefonnetz,

Fig. 4 eine Darstellung des Zeitablaufs des automatischen Empfangsprotokolls für eine Funkverbindung des Fernkopierers,

Fig. 5 ein Blockschaltbild einer Anschalteinheit des Fernkopierers,

Fig. 6 ein Flußdiagramm des logischen Betriebsablaufs der rufenden Station, und

Fig. 7 ein Flußdiagramm des logischen Betriebsablaufs der gerufenen Station.

Figur 1 zeigt eine Gabelschaltung 1, die mit einem Übertrager 2 zur Trennung der zwei Leitungen a, b von der Gabelschaltung 1 verbunden ist. Die Leitungen a, b dienen sowohl als Sendeleitungen TX als auch als Empfangsleitungen RX. Die Leitungen a, b werden entweder an ein Telefon, an das öffentliche Telefonnetz PSTN (= Public Switched Telephone Network) oder an das Funknetz angeschaltet. Die Gabelschaltung 1 ist eine sogenannte aktive Gabelschaltung und ermöglicht die Umstellung von vier Leiter auf zwei Leiter. In der Gabelschaltung 1 sind ein Umschalter 3 für die Umstellung von vier auf zwei Leiter sowie Operationsverstärker 4, 5, 6, 7 vorhanden, über welche die Signale in einen Fernkopierer eingespeist werden, der in Fig. 1 im Einzelnen nicht dargestellt ist. Die Gabelschaltung 1 ist Bestandteil eines herkömmlichen Fernkopierers. Auf der rechten Ausgangsseite der Gabelschaltung sind die vier Leiter der beiden Leitungen TX, RX dargestellt. Über die Sendeleitung TX wird beispielswiese ein Analogsignal aus dem Fernkopierer in die Gabelschaltung 1 eingespeist, das über den Umschalter 3 und den Operationsverstärker 4 läuft, aus der Gabelschaltung 1 austritt und über den Übertrager 2 im Verhältnis 1:1 in das öffentliche Telefonnetz PSTN oder in das Funknetz eingespeist wird.

Beim Empfangsbetrieb des Fernkopierers wird über die Leitungen a, b, die dann als Empfangsleitungen RX arbeiten, und den Übertrager 2 das Signal in die Gabelschaltung 1 eingespeist und gelangt über die Operationsverstärker 5, 6 und 7 auf die Empfangsleitung RX auf der rechten Seite der Gabelschaltung 1 und wird über diese Empfangsleitung RX in Schaltkreise des Fernkopierers eingespeist.

In Fig. 2 sind weitere Schaltungslemente des Fernkopierers dargestellt, nämlich ein Umschalter 8, der dem Übertrager 2 und der Gabelschaltung 1 vorgeschaltet ist, ein Relais 9 bzw. RY3, ein Stromsensor 10, Entstörglieder 11, 12 und eine Überspannungs-Schutzschaltung 13. Der Umschalter 8 enthält ein Relais RY4, das zwischen dem Telefon- und dem Funknetz umschaltet. In Fig. 1 sind die Relaiskontakte RY4/1 und RY4/2 in einer Stellung gezeigt, in der der Fernkopierer an das Funknetz angeschaltet ist. Wird das Relais RY4 des Umschalters 8 umgeschaltet, so wird die Verbindung mit dem Telefonnetz bzw. mit dem Telefon hergestellt, das dem Fernkopierer zugeordnet ist.

Das Relais 9 schaltet entweder das Telefon oder den Fernkopierer an das Telefonnetz PSTN an. In Fig. 2 ist der Fernkopierer mit dem Telefonnetz PSTN verbunden, sobald im Umschalter 8 die Relaiskontakte RY4/1 und RY4/2 auf die Kontakte NC umgelegt sind.

Mittels des Stromsensors 10 wird festgestellt, ob der Telefonhörer des zugeordneten Telefons abgenommen ist oder nicht. Falls der Telefonhörer abgenommen ist, es fließt dann Strom in Telefonkreis, kann der Fernkopierer die Telefonleitung übernehmen, d.h. er wird mit dem Telefonnetz PSTN verbunden und beginnt zu senden. Andernfalls, wenn der Telefonhörer aufliegt, fließt kein Strom im Telefonkreis, was zur Folge hat, daß der Fernkopierer nicht senden kann.

In den Leitungen zu dem öffentlichen Telefonnetz PSTN und dem Telefon sind Entstörglieder 11 bzw. 12 angeordnet, die hochfrequente Signale von dem Telefonnetz bzw. dem Telefon abhalten. Desweiteren ist eine Überspannungs-Schutzschaltung 13 in den Leitungen zu dem öffentlichen Telefonnetz PSTN angeordnet, um Überspannung von dem Telefonnetz abzuhalten.

In Fig. 3 ist der Arbeitsablauf über der Zeit zwischen zwei miteinander kommunizierenden Fernkopierern dargestellt, weiterhin als rufende und gerufene Station bezeichnet. Die rufende Station baut die Verbindung zu der gerufenen Station über das öffentliche Telefonnetz PSTN auf. Es wird der Startknopf der rufenden Station gedruckt. Die gerufene Station meldet sich mit einem CED-Signal, das ist ein Identifikationssginal. Der rufenden Station werden neben der Kennung die Leistungsmerkmale NSF(S) + NSF(C)- + CSI + DIS der gerufenen Station mitgeteilt. Es erfolgt eine Bestätigung durch die rufende Station, die auch die Betriebsweise (Modus) der gerufenen Station festlegt. Im Anschluß daran werden von der rufenden Station ein erstes sowie weitere Trainingsignale ausgesandt. Die gerufene Station teilt mit, ob sie das bzw. die Trainingssignale verstanden hat (CFR oder FTT im Betriebsablaufdiagramm). Wird das erste Trainingssignal empfangen, so erfolgt eine positive Bestätigung, durch Senden eines Signals CFR, daß die gerufene Station empfangsbereit ist. Anderenfalls wird ein Signal FTT ausgesandt, was begleitet wird von einer Rückkehr der gerufenen Station in einen Betriebszustand, in dem das erste Trainingssignal empfangen werden kann. Nach Aussenden des Bestätigungssignals CFR erfolgt die Übertragung der Bild/Dateninformation, und danach wird der Sendevorgang durch ein Endsignal oder sonstige Signale als beendet angezeigt.

In Fig. 4 ist der Zeitablauf eines Protokolls für eine Übertragung über das Funknetz dargestellt. Die auf der Empfangsseite, rechts von der Zeitlinie eingezeichneten Signale werden von der gerufenen Station nicht gesendet, sie sind eliminiert. Da aber auf der Sendeseite von der rufenden Station ein Antwortsignal erwartet wird, sobald ein Wecksignal, das ist ein digitales Klingelsignal, der rufenden Station ausgesandt wurde, tritt an die Stelle des eliminierten Identifikationssignals NSF, NSF, CSI, DIS ein in der rufenden Station gespeichertes Signal 14. Die übrigen, durch ein hochgestelltes N markierten Signale $CED^N$, $CFR^N$, $MCF^N$ sind keine von der gerufenen Station auszusendenden Signale, sondern sind so zu verstehen, daß der rufenden Station bestätigt wird, daß solche Signale geliefert wurden. Die gerufene Station fragt stets ab, d.h. kontinuierlich, ob von der rufenden Station ein Wecksignal gesendet wird.

Fig. 5 zeigt eine Übersicht über eine Anschalteinheit 18 im Fernkopierer. Diese Anschalteinheit 18 umfaßt die Gabelschaltung 1, den Umschalter 8, das Relais 9, den Stromsensor 10, die Entstörglieder 11, 12, die Überspannungs-Schutzschaltung 13, eine Ruferkennung 15, eine Stromversorgung 16 und Treiberstufen 17 für Relais RY1, RY3, RY4. Die Ruferkennung 15 ist parallel zu dem Telefon und dem öffentlichen Telefonnetz PSTN geschaltet. Sobald ein Ruferkennungssignal in Form eines Klingelzeichens über das öffentliche Telefonnetz PSTN an das Telefon geleitet wird, wird es von der Ruferkennung 15 erfaßt und den übrigen Schalteinheiten des Fernkopierers zugeleitet, um diesen auf Empfangsbereitschaft zu schalten. Die übrigen Schaltelemente der Anschalteinheit 18 wurden schon voranstehend beschrieben, so daß eine Wiederholung dieser Beschreibung entfallen kann. Ein Senderelais RY1 befindet sich im Funkübertragungskreis, und zwar für das Senden von Daten über das Funknetz.

Die Flußdiagramme der Figuren 6 und 7 sind selbstklärend und bedürfen daher keiner weiteren Erläuterungen. Zu dem Flußdiagramm für den Sendebetrieb der Figur 6 ist nur soviel zu sagen, daß nach der Verzweigung JA/START der rechte Pfad das Senden eines Dokuments über das Funknetz und der linke Pfad das Senden über das öffentliche Telefonnetz PSTN wiedergeben. Das Flußdiagramm für den Empfangsbetrieb nach Fig. 7 zeigt das Anschalten der gerufenen Station durch das Wecksignal oder einen Klingelton. Nach der Verzweigung Klingelton/Wecksignal gibt der rechte Pfad den weiteren Empfangsbetrieb durch Anschalten mittels des Wecksignals über Funkverbindung wieder, während der linke Pfad den Empfang mittels des Klingeltons über das Telefonnetz PSTN anzeigt.

Obschon das Gerät gegenüber einem herkömmlichen Fernkopierer tiefgreifend geändert ist, bleibt es mit allen Fernkopierern der Gruppe 3 und der Gruppe 2 kompatibel, die über das öffentliche Wählnetz (PSTN) verbunden sind. In eine Verbindung über PSTN implementiert dieses Gerät automatisch die Funktion ECM (Error Correction Mode), falls die Partner damit ausgestattet sind. Dadurch wird sichergestellt, daß das übertragene Dokument einwandfrei von den Partnern empfangen wird. Damit büßt das Gerät seine Funktion der herkömmlichen Kommunikation über das Telefonnetz nicht ein, was eine nicht aus den Augen zu verlierende Betriebsweise darstellt. Das Gerät gewinnt an Zuverlässigkeit und Flexibilität und gibt dem Anwender auch Sicherheit für die Richtigkeit der Information bei der übertragung und beim Empfang von Dokumenten. Das Gerät gehort zur neuesten Fernkopierergeneration und enthält alle technologischen Neuheiten für die Übertragungssicherheit von Dokumenten, wie die erwähnte Fehlerkorrekturfunktion ECM (Error Correction Mode). Die Besonderheit dieser Funktion besteht darin, daß der Zustand der beim empfangenden Fernkopierer ankommenden Daten ständig überprüft und bei einer Fehlerfeststellung die Korrektur beim sendenden Gerät angefordert wird, das die gewünschten Daten nochmals übermittelt. Dieser Vorgang setzt sich bis zur vollständigen Übertragung der Dokumente fort.

Funknetz-Schnittstelle

Diese Schnittstelle bietet grundsätzlich die Möglichkeit, sich sowohl auf das PSTN-Netz zu schalten als auch direkt an das Funknetz anzuschließen. Es enthält zwei zusätzliche, softwaregesteuerte Relais zur Umschaltung der Kommunikationslinien. Die Impedanz der Übertragungsleitung beträgt für Wechselstrom 600 Ohm und die Funkstation muß daher mit einem Telefon- Interface von 600 Ohm ausgestattet sein. Wenn ein Interface nicht vorhanden ist, kann der Mikrofoneingang benutzt werden, nachdem der Fernkopierer mit einem speziellen Verbinder versehen worden ist, und nach Anpassung der Impedanz zwischen Fernkopierer und Funknetz bzw. Funkstation.

Um dies effektiv und ohne große Änderung der bestehenden Gerätekonzeption zu erreichen, sind folgende Probleme zu lösen:

a) Impedanzausgleich,

b) Umstellung von vier auf zwei Leiter.

Zum Senden und für den Empfang werden im Funknetz zwei unterschiedliche Pfade mit verschiedenen Eingangs-/Ausgangsimpedanzen genutzt. Es ist offensichtlich, daß zur schaltungsmäßigen Verbindung der beiden Pfade, d.h. dem Mikrofon zum Senden und dem Lautsprecher für den Empfang, je zwei Leiter, also insgesamt vier Leiter, erforderlich sind.

Die Ausgangs- und Eingangsimpedanz eines Fernkopierers beträgt 600 Ohm auf zwei Leitern; über diese beiden Leiter erfolgt sowohl das Senden als auch der Empfang. Intern arbeitet der Fernkopierer zwar auch mit vier Leitern zum Senden und Empfangen, die jedoch andere Impedanzen aufweisen und die vor dem Anschluß an die Telefonlinie von vier auf zwei umgesetzt werden. Es ist daher nicht möglich, eine direkte Verbindung der vier Leiter an dieser Stelle vorzunehmen.

Um die beiden Systeme miteinander zu vereinbaren, muß demzufolge ein Interface für ihre Angleichung geschaffen werden, das für alle marktgängigen Typen von Funknetzen geeignet ist.

Die Eingangs-/Ausgangsimpedanz kann von einem Hersteller zum anderen variieren, und daher ist die Schaffung eines solchen Interface schwierig, im Hinblick darauf, daß ein Gerät nach der Erfindung auf international genormte, einheitliche Weise mit jedem beliebigen Sende- und Empfangsgerät eines Funknetzes verbunden werden soll.

Auf dem Markt gibt es Geräte, die für eine telefonische Anschaltung an Funknetze eingerichtet sind. Aufgrund der bestehenden Normen muß ein Sende-und Empfangsgerät mit telefonischer Anschaltung eine Eingangs- und Ausgangsimpedanz von 600 Ohm besitzen, um die beiden Geräte - Fernkopierer und Funkstation -direkt aneinander anschließen zu können. Die Umstellung von vier auf zwei Leiter und die Impedanzabgleichung erfolgen bei diesen Geräten durch den Schaltungsaufbau des Interface. Der Konverter des Interface wird als "Gabel" bezeichnet. Es gibt zwei Arten von Gabeln, aktive und passive. Die aktive Gabel besteht aus elektronischen Bauteilen (Transistor, Operationsverstärker usw.), während die passive Gabel vergleichbar einem Transformator mit drei Kupferspulen aufgebaut ist, wobei eine dieser Spulen als EIN-/AUSGANG und von den anderen beiden eine für den Empfang und eine zum Senden dienen. Im erfindungsgemäßen Gerät wird die in Fig. 1 gezeigte aktive Gabel eingesetzt.

Auswahl der Netzart

Die Auswahl der Betriebsart erfolgt über die Tastatur. Die Bedienungsperson wird bei der Auswahl durch die Anzeige des Gerätes angeleitet, sobald ein Dokument in die Zuführungseinrichtung bzw. in den Scanner eingelegt wird. Dabei hat der Bediener zu wählen, welcher Übertragungsweg verwendet werden soll, d.h. PSTN oder Funknetz. Es ist offensichtlich, daß zusätzlich zur Wahl des Bedieners eine Schaltung vorhanden sein muß, welche die Daten von einem Übertragungsweg auf den anderen umlenkt. Diese Umschaltung ist erforderlich, um das Gerät mit der Außenwelt kompatibel zu machen.

Hierzu sind in das Gerät zwei Relais eingebaut, die durch Vorverstärkerstufen gesteuert werden, die ihrerseits ihre Befehle durch die Software-Steuerung erhalten. Dadurch wird eine reine Hardware-Lösung vermieden, die Verkabelungen und zusätzliche Drucktasten erforderlich macht. Auch der fehlende Platz in dem sehr kompakten Gerät steht einer Hardware-Lösung entgegen. Das Schema in Fig. 2 zeigt nur den Teil, an dem Änderungen des Schaltungsaufbaus vorgenommen worden sind.

Übertragung über Funknetz

Wenn ein oder mehrere zu übertragende Dokumente in den automatischen Dokumenteneinzug (ADF) eingelegt werden und die Start-Taste betätigt wird, schalten alle örtlich entfernt aufgestellten Geräte, die in der Lage sind, das übertragene Signal zu empfangen, automatisch auf Empfang und drucken gleichzeitig das übertragene Dokument.

Auf dem Gebiet der Fernkopierer stellt diese Funktion eine Besonderheit der vorliegenden Erfindung dar, d.h. bisher gibt es keinen Fernkopierer, der gleichzeitig an eine Gruppe von empfangenden Geräten übertragen kann. Um dies zu erreichen, wurde das Kommunikationsprotokoll des Fernkopierers vollständig geändert. Das Protokoll eines herkömmlichen Fernkopierers benötigt immer eine Antwort des Empfängers, und es findet im wesentlichen ein Dialog zwischen dem sendenden und dem empfangenden Gerät statt. Im Diagramm von Fig. 3 ist der übliche Ablauf des Dialogs zwischen zwei Fernkopierern dargestellt.

Wie anhand von Fig. 3 ersichtlich ist, ist die Empfangsseite stets betriebsbereit, um Befehle von der Sendeseite zu empfangen. Die Sendeseite erwartet natürlich eine Antwort von einem einzigen der empfangenden Fernkopierer. Die Synchronisierung mehrerer Fernkopierer ist, wenn überhaupt, nur schwierig zu erreichen. Der Dialog zwischen zwei an das öffentliche Wählnetz (PSTN) angeschlossenen Fernkopierern spielt sich grundsätzlich folgendermaßen ab: Nach Erkennen des Telefonklingelsignals beginnt der empfangende Fernkopierer zu arbeiten, und es startet die Dialogprozedur mit dem sendenden Fernkopierer. Der empfangende Fernkopierer überträgt die Daten seiner technischen Eigenschaften, d.h. er stellt sich dem sendenden Fernkopierer vor und übermittelt sein Leistungsprofil, zu dem beispielsweise das Drucken auf Papier im Format DIN A 4, mit einer Geschwindigkeit von 9600 bps udgl. gehören. Nachdem der sendende Fernkopierer die technischen Möglichkeiten des Empfangsgerätes kennt, sendet er Befehle aus, wie zum Beispiel den Drucker für den Druck eines Dokuments im Format DIN A4 einzustellen, die Auflösung auf 7,7 l/mm und die Modemgeschwindigkeit auf 9600 bps. Der empfangende Fernkopierer bereitet sich darauf vor, nach der vom Sender befohlenen Betriebsweise zu arbeiten.

In Figur 4 ist das geänderte Protokoll für die Übertragungsfunktion über ein Funknetz an mehrere Stationen dargestellt.

Aus Fig. 4 ist ersichtlich, daß das Protokoll gegenüber Fig. 3 so geändert ist, daß die Empfangsseite keine Informationen an die Senderseite überträgt, da schon die Information vorliegt, daß das Empfangsgerät der gleichen Familie angehört. Aufgrund der Protokolländerung ist dieses Gerät mit Geräten anderer Hersteller nicht kompatibel, auch wenn diese für die Kommunikation über Funkverbindung abgeändert sind. Auch die Übertragung an mehrere Stationen (Broadcasting) steht im Zusammenhang mit der adressierten Übertragung, d.h. der empfangende Fernkopierer muß erkennen, wann eine Sendung frei (Broadcasting) und wann sie adressiert ist. Durch Aussenden der NSS-Befehle (Non Standard Signal) wird in das Protokoll ein bestimmter, aus vier Hexadezimalziffern bestehender Code angewandt. Im Betrieb über PSTN wird dieser Code als Polling-Code bezeichnet und beim Dokumentenabruf benutzt. Der Abrufende hat den Dokumentenabruf vorher mit der Gegenstelle zu vereinbaren.

Bei der vorliegenden Erfindung wird diese Eigenschaft genutzt, um einen Fernkopierer mit dem gleichen Code empfangen zu lassen oder nicht. Es wird festgesetzt, daß die Aussendung des Code 1111 durch den sendenden Fernkopierer für alle empfangenden Fernkopierer bedeutet, daß es sich um eine freie Sendung (Broadcasting) handelt und sich daher alle für den Empfang vorzubereiten haben. Das Protokoll, das vom empfangenden Fernkopierer bei der Umschaltung auf Empfang ausgegeben wird, wird eliminiert, um einerseits das Broadcasting zu ermöglichen und andererseits ein ständiges Umschalten der Funkstation von Senden auf Empfang und umgekehrt, je nachdem, ob der Fernkopierer das Protokoll sendet oder empfängt, zu vermeiden. Bei einem normalen Funksende- und -empfangsgerät ist auf dem Mikrofon ein kleiner Druckknopf zum Umschalten auf Senden oder Empfang vorhanden. Beim Umschalten des Funkgerätes ist im allgemeinen ein krächzendes Geräusch zu hören, das einige Hundert Millisekunden, wenn nicht sogar Sekunden, dauert, bevor ein klarer Empfang möglich ist. Bei Verwendung des auf dem Wählnetz üblichen Protokolls, d.h. eines vollständigen Dialogs mit Befehlen und Antworten in einem Zeitabstand von jeweils ca. 75 Millisekunden, wurde das Protokoll während des vom Funkgerät bei der Umschaltung vom Senden auf Empfang erzeugten Geräusches vernichtet werden. Mit dem wie zuvor beschrieben geänderten Protokoll findet dagegen nur eine Umschaltung statt, und zwar zu Beginn der Übertragung. Dies ist ein wichtiges Merkmal des erfindungsgemäßen Gerätes.

Adressierte Übertragung über Funkverbindung

Wenn das zu übertragende Dokument an einen einzigen oder einige wenige Korrespondenten adressiert wird, genügt es, über die Tastatur einen Erkennungscode einzugeben und nur das betreffende Gerät oder mehrere Geräte mit dem gleichen Code auf Empfang zu schalten. Diese Funktion hat sich als erforderlich erwiesen, um zu vermeiden, daß alle Fernkopierer des gleichen Netzes für ein Dokument empfangsbereit gemacht werden. Für diese Funktion gilt das gleiche wie für das Broadcasting, nur mit dem Unterschied, daß anstatt des freien Code 1111 der Erkennungscode des Gerätes eingegeben wird, an das das Dokument adressiert wird.

Angabe der verwendeten Netzart

In den vom Fernkopierer ausgegebenen Berichten ist angegeben, ob eine Übertragung bzw. ein Empfang über Funkverbindung oder über PSTN erfolgt ist, und damit steht ein nicht nur quantitativer, sondern auch qualitativer Beleg der über das Gerät gelaufenen Datenübertragung zur Verfügung.

Automatischer Empfang über Funkverbindung

Bei Erkennung eines über Funk empfangenen vorgegebenen Signals schaltet das örtlich entfernt aufgestellte Gerät automatisch auf Empfang. Durch dieses spezielle Signal wird ein zufälliges Umschalten des Fernkopierers auf Empfang durch im Äther vorhandene Signale anderer Frequenzen vermieden.

Es genügt nicht, eine seitens des empfangenden Geräts erkennbare Frequenz auszusenden, damit dieses auf Empfang schaltet, da dies gleichbedeutend damit ist, daß das Gerät stets empfangsbereit ist. Der Grund hierfur ist die Tatsache, daß im Äther stets eine durch den Fernkopierer erkennbare Frequenz vorhanden ist, die von den unterschiedlichsten Sendern ausgesandt sein kann. Um dies zu vermeiden, wird ein digital codiertes Signal von dem sendenden Fernkopierer bei der übertragung ausgesandt. Dieses sogenannte Aktivierungs-(Weck-)Signal wird vor dem Aussenden des Protokolls abgestrahlt und für die Dauer von ca. 5 Sekunden gesendet. Dadurch werden alle Geräte auf Empfang geschaltet und warten auf die Befehle des sendenden Geräts. Als WAKE-UP-Signal werden von dem sendenden Fernkopierer ca. 5 Sekunden lang sogenannte Blockbegrenzungszeichen (FLAGS) gesendet. Das FLAG ist ein Steuer- oder Zustandsbyte zur Aktivierung oder Anzeige eines bestimmten Zustandes bzw. der Erfüllung einer Bedingung. Das FLAG besteht aus einem Byte mit einem Hexadezimalwert von 7E (01111110). Fig. 4 zeigt den Beginn der Aktivierungs-(Weck-)Prozedur auf.

Übertragungsgeschwindigkeit

Die Übertragungsgeschwindigkeit über Funk kann unabhängig von der Übertragungsgeschwindigkeit über PSTN geregelt werden. Über Funk ist die Geschwindigkeit zwischen einem Mindestwert von 2400 bps und einem Höchstwert von 9600 bps wählbar, wobei eine Geschwindigkeit von 4800 bps bevorzugt wird. Die eingestellte Übertragungsgeschwindigkeit über Funk hat keinen Einfluß auf die eingestellte Geschwindigkeit über PSTN.

Bei Übertragung über PSTN kann die Übertragungsgeschwindigkeit zwischen 9600 bps und 2400 bps eingestellt werden. Diese Wahlmöglichkeit ist sehr hilfreich beim Auftreten von Störungen in der Telefonleitung. Treten solche, im allgemeinen nur vorübergehende Störungen auf, wird die Übertragungsgeschwindigkeit so lange reduziert, bis die Telefongesellschaft die störungsfreie Übertragung über die Leitung wiederhergestellt hat. Es sollte jedoch nicht die Regel sein, daß die Übertragungsgeschwindigkeit bis zum Beheben von Leitungsmängeln herabgesetzt werden muß. Es wird vom Normalfall ausgegangen, bei dem das Gerät auf die höchste Übertragungsgeschwindigkeit eingestellt ist.

Beim Betrieb über Funk liegt die Sache anders, denn es sind hierbei viel häufiger Störungen der Kommunikation oder des Durchlaßbereiches des Übertragungssystems anzutreffen, die eine Reduzierung der Übertragungsgeschwindigkeit erfordern. Diesem Umstand darf jedoch nicht Rechnung getragen werden, indem die Übertragungsgeschwindigkeit für Funk an die für PSTN festgesetzte Übertragungsgeschwindigkeit gebunden wird. Dadurch würde nämlich die Übertragung über PSTN benachteiligt werden. Die beiden Übertragungsgeschwindigkeiten sind voneinander getrennt und können unterschiedlich gewählt werden, so daß die beiden Betriebsweisen unabhängig voneinander sind. Die Übertragungsgeschwindigkeit kann durch sogenannte BIT-Schalter eingestellt werden; das sind Binärzeichen-Schalter in der Software anstelle von elektromechanischen Schaltern (DIP-SWITCH). Zur Einstellung der Geschwindigkeit über PSTN dient der Bit-Schalter Nr. 2 Bit 0-1-2-3, wobei Bit 0 und 1 die Übertragungsgeschwindigkeit und Bit 2 und 3 die Empfangsgeschwindigkeit festlegen. Zur Einstellung der Übertragungsgeschwindigkeit über Funk ist der Bit-Schalter Nr. 18 vorgesehen; die Geschwindigkeit wird mit Bit O-1 gewählt, während Bit 2 und 3 nicht verwendet werden, weil bei der betreffenden Vorrichtung die Befehle vom sendenden Gerät erteilt werden. Hierfur ist es nicht erforderlich, die eingestellte Geschwindigkeit des empfangenden Gerätes zu kennen.

| Übertragungsgeschwindigkeit über Funk | | | |
|---|---|---|---|
| Bit-Schalter 18 | Bit 1 | 0 | |
| | 0 | 0 | 9600 bps |
| | 0 | 1 | 7200 bps |
| | 1 | 0 | 4800 bps |
| | 1 | 1 | 2400 bps |

Anschluß an Chiffriermaschine

Die erfindungsgemäße Vorrichtung kann über einen 25-poligen Steckverbinder an eine Chiffriermaschine, z.B. Modell Telsy KD 100 oder andere kompatible Geräte angeschlossen werden. Die bei diesem Verbinder anstehenden Signale sind digital (TTL-Regel).

Das Chiffrieren ist in den Fallen erforderlich, in denen der Benutzer vertrauliche Dokumente übertragen will. Besonders über Funk ist es ohne Sicherung bekanntlich sehr leicht, Gespräche oder Datenübertragungen abzuhören. Durch diesen Hardware-und Softwareanschluß wird die Abhörmöglichkeit ausgeschlossen. Der Anschluß einer Chiffriermaschine ist zusätzlich möglich, d.h. auch ohne eine Chiffriermaschine kann der Fernkopierer betrieben werden. Am wichtigsten ist, daß das übertragene Dokument bei Einschalten der Chiffriermaschine sowohl im Betrieb über PSTN als auch über Funk chiffriert übertragen wird. Die Daten werden, bevor sie zur Modulierung in das Modem gelangen, zur Chiffriermaschine gesandt, in der sie verschlüsselt werden. Danach gelangen die Daten je nach der Wahl der Bedienungsperson in das Funknetz oder in das öffentliche Wählnetz. Diese Option setzt voraus, daß die zuvor direkt zum Modem führende Datenleitung unterbrochen wird, so daß die Daten zuerst der Chiffriereinheit zugeleitet werden und dann chiffriert zurückkommen und den zuvor unterbrochenen Weg fortsetzen.

Bei dieser vereinfachten Beschreibung des Anschlusses an die Chiffriermaschine ist die Rede von einem materiellen der die übertragenen Daten weiterbefördert. Es werden auch noch Kontrollsignale angewandt, die zur Einschaltung der Chiffriermaschinen dienen, um eine Gleichlaufphase zwischen den Chiffriermaschinen zu starten und die Geheimcodes und Chiffrieralgorithmen austauschen zu können. Die Steuerung dieser Signale geschieht durch die Software. Der Datenleiter und die Kontrollsignale werden über den 25-Stift-Verbinder, an den die Chiffriermaschine angeschlossen wird, aus der Vorrichtung hinausgeführt.

Um die Betriebsweise der erfindungsgemäßen Vorrichtung näher zu erläutern, werden im folgenden kurz die Betriebsabläufe beschrieben, die für eine freie (Broadcasting) bzw. adressierte Übertragung über Funk erforderlich sind.

A) Funkübertragung

Bei der Einführung des zu übertragenden Dokuments erscheint auf der Anzeige die Aufforderung, die zu übertragende Nummer einzugeben. Wird darauf mit NEIN geantwortet, so beginnt der Fernkopierer direkt mit der Übertragung und gibt automatisch den Code 1111 in das Protokoll ein. Alle empfangenden Geräte erkennen diesen Code als freien Code und starten die Empfangsprozedur des Dokuments, auch wenn sich dieser Code von dem lokal gespeicherten Code unterscheidet.

Der nachstehend beschriebene Ablauf zur Führung der Bedienungsperson ist als Beispiel angegeben und kann daher auch geandert werden, um den Ablauf zu verbessern oder zu vereinfachen.

Ablauf:

Bei der Einführung des Dokuments erscheint auf der Anzeige:

**NORMAL JA**
**FUNK START**

Wird JA gedrückt, befolgt der Fernkopierer die normale Übertrgungsprozedur über PSTN: wird START gedrückt, erscheint auf der Anzeige:

**ADRESSE JA**
**FÜR NEIN START DRÜCKEN.**

Wird START gedrückt, erfolgt die normale Übertragungsprozedur über Funk, der Fernkopierer gibt automatisch den Zustandsabfrage-Code 1111 in das Protokoll ein und führt dann wie oben beschrieben eine Funkübertragung durch. JA wird gedrückt, wenn eine adressierte Übertragung erwünscht ist.

B) Adressierte Übertragung

Wird ein anderer Zustandsabfrage-Code als 1111 eingegeben, so ist die Übertragung an ein einziges oder mehrere Geräte mit dem gleichen Code adressiert.

Ablauf:

Bei der Einführung des Dokuments erscheint auf der Anzeige:

**NORMAL JA**
**FUNK START.**

Nachdem START gedrückt worden ist, erscheint auf der Anzeige:

**ADRESSE JA**

**FÜR NEIN START DRÜCKEN**

Wird START gedrückt, läuft die normale Übertragungsprozedur. über Funk wie oben beschrieben ab. Wird JA gedrückt, erscheint auf der Anzeige:

**NUMMER EINGEBEN**

**CODE**

Code (O...F) eintasten und nach Eingabe der letzten Ziffer zur Bestätigung JA drücken. Danach beginnt die normale Übertragungsprozedur über Funk. In diesem Fall wird der soeben eingegebene neue Code in das Protokoll aufgenommen und bleibt bis zur nächsten Änderung durch die Bedienungsperson gespeichert. Nach dem Eintasten der Nummer oder des Code erscheint auf dem Display:

**START DRÜCKEN.**

Nachdem START gedrückt worden ist, sind alle Geräte mit dem gleichen Code für den Empfang bereit.

Wie bereits unter Punkt - Wahl der Netzart -angedeutet wurde, ist eine Änderung der Umschalt-Hardware erforderlich, um das Gerät mit einem Netzartwählsystem auszustatten. Dazu sind zwei zusätzliche Relais auf der NCU-Leiterplatte vorgesehen. Ein erstes, mit RY4 bezeichnetes 5-Volt-Relais mit zwei Wechselkontakten dient zum Umschalten der Linien PSTN/Funk. Ein zweites, mit RY1 bezeichnetes 5-Volt-Relais mit einem Kontakt wird von einem Funkgerät zum Umschalten auf Senden verwendet. Das Ausgangssignal ist zwischen 0 db bis 15 db regelbar, bei einer Impedanz von 600 Ohm. Die beiden Leiter, die von der Primärwicklung eines Transformators T1 zum Ausgang (PSTN) führen, werden aufgetrennt, um an die Kontake eines Relais RY4 angeschlossen werden zu können. Von diesen beiden Kontakten aus wird die Abzweigung vorgenommen: auf einer Seite werden sie über die beiden Öffnungskontake mit dem Funkgeräte-Ausgang verbunden, auf der anderen Seite wird mit den Schließkontakten die vor der Abzweigung getrennte Verbindung zu PSTN wiederhergestellt. Wie aus dem Schaltplan in Fig. 5 ersichtlich ist, ist der Fernkopierer stets betriebsbereit, jeden über PSTN oder über Funk kommenden Anruf zu beantworten, da er über die Kontakte des Relais RY4 für den Empfang über Funk und über die Kontakte des Relais RY3 für den Empfang der Klingeltöne der Telefonleitung vorbereitet ist. Die in Fig. 5 getrichelte Schaltung 15 ist zur Erfassung der Klingeltöne bereit.

Die Ablaufdiagramme in den Figuren 6 und 7 geben einen Hinweis auf den logischen Ablauf und eine Vorstellung von dem komplizierten Aufbau des Fernkopierers.

Zusammenfassend ist festzustellen, daß die erfindungsgemäße Vorrichtung einen außerordentlich großen technischen Fortschritt auf dem Gebiet der Faksimileübertrgung darstellt. Dabei ist zu unterstreichen, daß die vorangehende Beschreibung sich nur auf eine bevorzugte praktische Ausführungsform der Erfindung bezieht und zahlreiche Varianten, Änderungen, Ergänzungen und/oder Ersetzungen von Bestandteilen möglich sind, ohne sich vom Geist und Zweck der Erfindung zu entfernen.

## Ansprüche

1. Gerät zur Faksimile-Übertragung über ein Telefonnetz, mit einer Ruferkennung, dadurch gekennzeichnet, daß das Gerät aus einem herkömmlichen Fernkopierer und einer Anschalteinheit (18) besteht, die eine Gabelschaltung (1) zum Umschalten von zwei Leiter (a, b) auf vier Leiter (RX, GND, TX, GND) aufweist.

2. Gerät nach Anspruch 1, dadurch gekennzeichnet, daß die Anschalteinheit (1) neben der Gabelschaltung (1) einen Umschalter (8) mit einem Relais RY4 zum Umschalten zwischen dem Telefon(PSTN)- und dem Funknetz, ein Relais RY3 (9), einen Stromsensor (10), Entstörglieder (11, 12), eine Überspannungs-Schutzschaltung (13), die Ruferkennung (15), Treiberstufen (17) für Relais RY1, RY3, RY4 sowie eine Stromversorgung (16) umfaßt.

3. Gerät nach Anspruch 1, dadurch gekennzeichnet, daß der Gabelschaltung (1) ein Übertrager (2) zum Trennen der zwei Leiter (a,b) von der Gabelschaltung (1) vorgeschaltet ist.

4. Gerät nach Anspruch 3, dadurch gekennzeichnet, daß das Übertragungsverhältnis des Übertragers 1:1 ist und daß die Leiter (a, b) entweder als Sendeleitungen TX oder als Empfangsleitungen RX geschaltet sind.

5. Gerät nach Anspruch 1, dadurch gekennzeichnet, daß die Gabelschaltung (1) einen Umschalter (3) für die Umstellung von vier auf zwei Leiter und Operationsverstärker (4, 5, 6, 7) enthält, über welche die Empfangs- bzw. Sendesignale laufen.

6. Gerät nach Anspruch 2, dadurch gekennzeichnet, daß der Umschalter (8) dem Übertrager (2) und der Gabelschaltung (1) vorgeschaltet ist und daß das Relais RY4 des Umschalters (8) zwischen dem Telefon (PSTN)- und dem Funknetz umschaltet.

7. Gerät nach Anspruch 2, dadurch gekennzeichnet, daß das Relais RY3 (9) ein dem Fernkopierer zugeordnetes Telefon oder den Fernkopierer an das Telefonnetz (PSTN) anschaltet.

8. Gerät nach Anspruch 2, dadurch gekennzeichnet, daß der Stromsensor (10) mit den Leitungen des Telefonnetzes (PSTN) verbunden ist und das Fließen eines elektrischen Stroms im Telefonkreis mißt, sobald der Telefonhörer abgenommen ist.

9. Gerät nach Anspruch 2, dadurch gekennzeichnet, daß die Leitungen zu dem Telefonnetz (PSTN) bzw. zu dem Telefon jeweils durch das Entstörglied (11 bzw. 12) miteinander verbunden sind, das hochfrequente Signale von dem Telefonnetz bzw. dem Telefon abhält und daß die Überspannungs-Schutzschaltung (13) die Leitungen zu dem Telefonnetz (PSTN) miteinander verbindet und Überspannungen von dem Telefonnetz fernhält.

10. Gerät nach Anspruch 2, dadurch gekennzeichnet, daß die Ruferkennung (15) parallel zu dem Telefonnetz (PSTN) und dem Telefon geschaltet ist und bei Erfassen eines Klingelsignals für das Telefon den Fernkopierer auf Empfang schaltet.

11. Gerät nach Anspruch 2, dadurch gekennzeichnet, daß das Relais RY1 ein Senderelais im Funkübertragungskreis ist, das das Funknetz für die Datenübertragung anschaltet.

12. Gerät nach Anspruch 1, dadurch gekennzeichnet, daß es rufende oder gerufene Station in einer Datenverbindung von mehreren Geräten über das Telefon- oder Funknetz ist.

13. Gerät nach Anspruch 12, dadurch gekennzeichnet, daß vor dem Senden eines Protokolls die rufende Station ein Wecksignal in Gestalt eines digitalen Erkennungssignals sendet, das diejenigen Geräte auf Empfang einstellt, an die das Protokoll übertragen werden soll.

14. Gerät nach Anspruch 13, dadurch gekennzeichnet, daß das Erkennungssignal in Gestalt eines Erkennungscode bei einer Funkübertragung über eine Tastatur des Geräts eingeb- und absetzbar ist.

15. Gerät nach Anspruch 12, dadurch gekennzeichnet, daß die Übertragungsgeschwindigkeit der Daten über das Funknetz unabhängig von der Übertragungsgeschwindigkeit der Daten über das Telefonnetz (PSTN) mit Hilfe eines BIT-Schalters festlegbar ist.

16. Gerät nach Anspruch 15, dadurch gekennzeichnet, daß jede der beiden Übertragungsgeschwindigkeiten im Bereich von 2400 bis 9600 bps wählbar ist.

17. Gerät nach Anspruch 13, dadurch gekennzeichnet, daß im Normalbetrieb über das Telefonnetz (PSTN) die gerufene Station sich mit einem Identifikationssignal CED meldet und der rufenden Station neben dieser Kennung ihre Leistungsmerkmale übermittelt.

18. Gerät nach Anspruch 17, dadurch gekennzeichnet, daß die rufende Station die Leistungsmerkmale bestätigt, den Modus der gerufenen Station festlegt und ein erstes sowie weitere Trainingssignale aussendet.

19. Gerät nach Anspruch 18, dadurch gekennzeichnet, daß die gerufene Station den Empfang des ersten Trainingssignals und ihre Empfangsbereitschaft durch Senden eines Signals CFR betätigt.

20. Gerät nach Anspruch 12, dadurch gekennzeichnet, daß bei einer Funkübertragung die gerufene Station keine Signale an die rufende Station überträgt, daß das Identifikationssignal NSF, NSF, CSI, DIS in der rufenden Station gespeichert ist und zu Beginn einer Übertragung nachgebildet wird.

21. Gerät nach Anspruch 12, dadurch gekennzeichnet, daß ein Anschluß an eine Chiffriermaschine über einen vielpoligen Steckverbinder vorhanden ist und daß das übertragene Dokument sowohl im Telefon- als auch im Funknetzbetrieb bei angeschlossener Chiffriermaschine verschlüsselt übertragen wird.

22. Gerät nach Anspruch 21, dadurch gekennzeichnet, daß die Chiffriermaschine in die Datenleitung vor dem Übertragungsmodem des Geräts für die Modulierung der Daten geschaltet ist.

FIG. 1

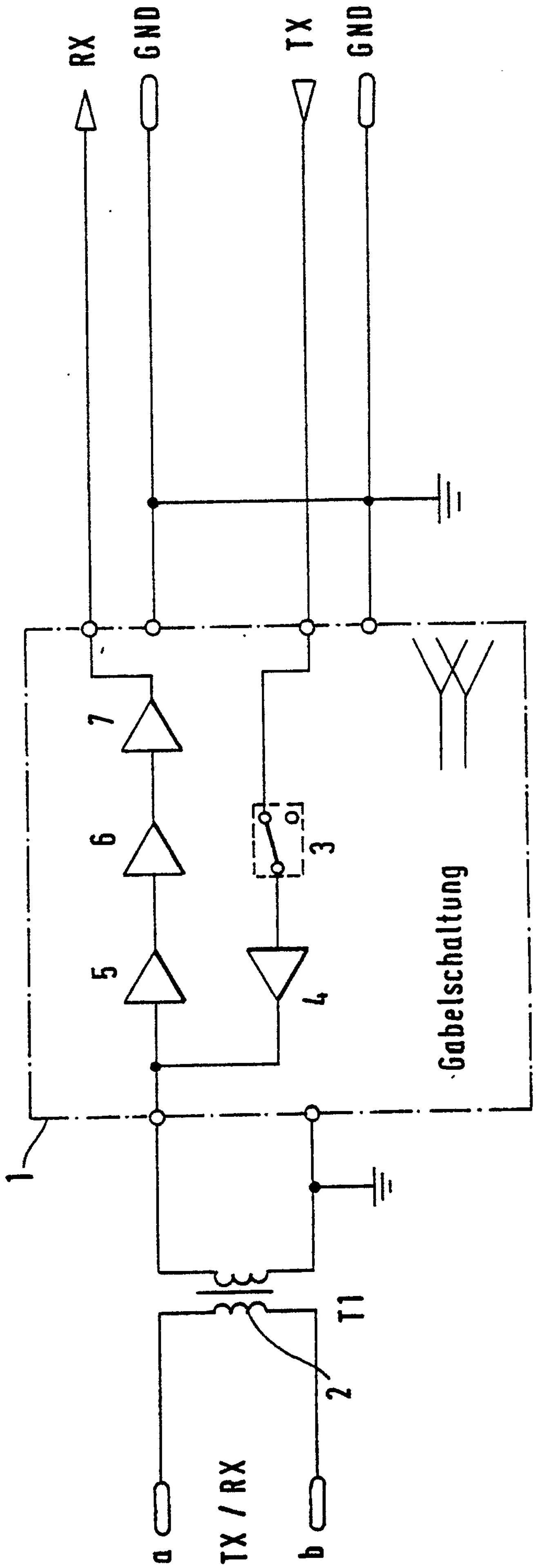

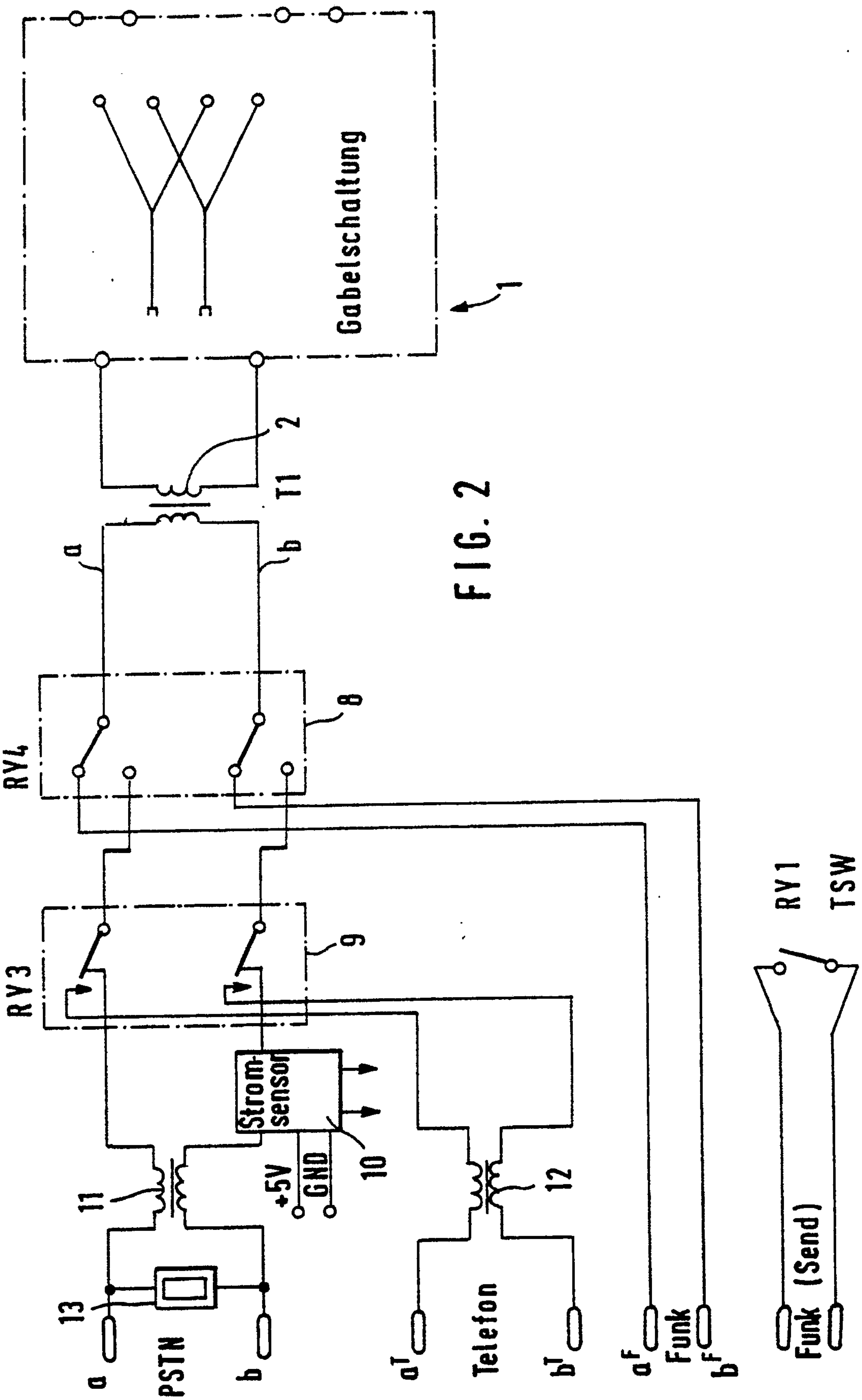
Gabelschaltung
1
2
T1
a
b
RV4
8
RV3
9
Strom-
sensor
10
+5V
GND
11
12
13
a
PSTN
b
aT
Telefon
bT
aF
Funk
bF
Funk (Send)
RY1
TSW

FIG. 2

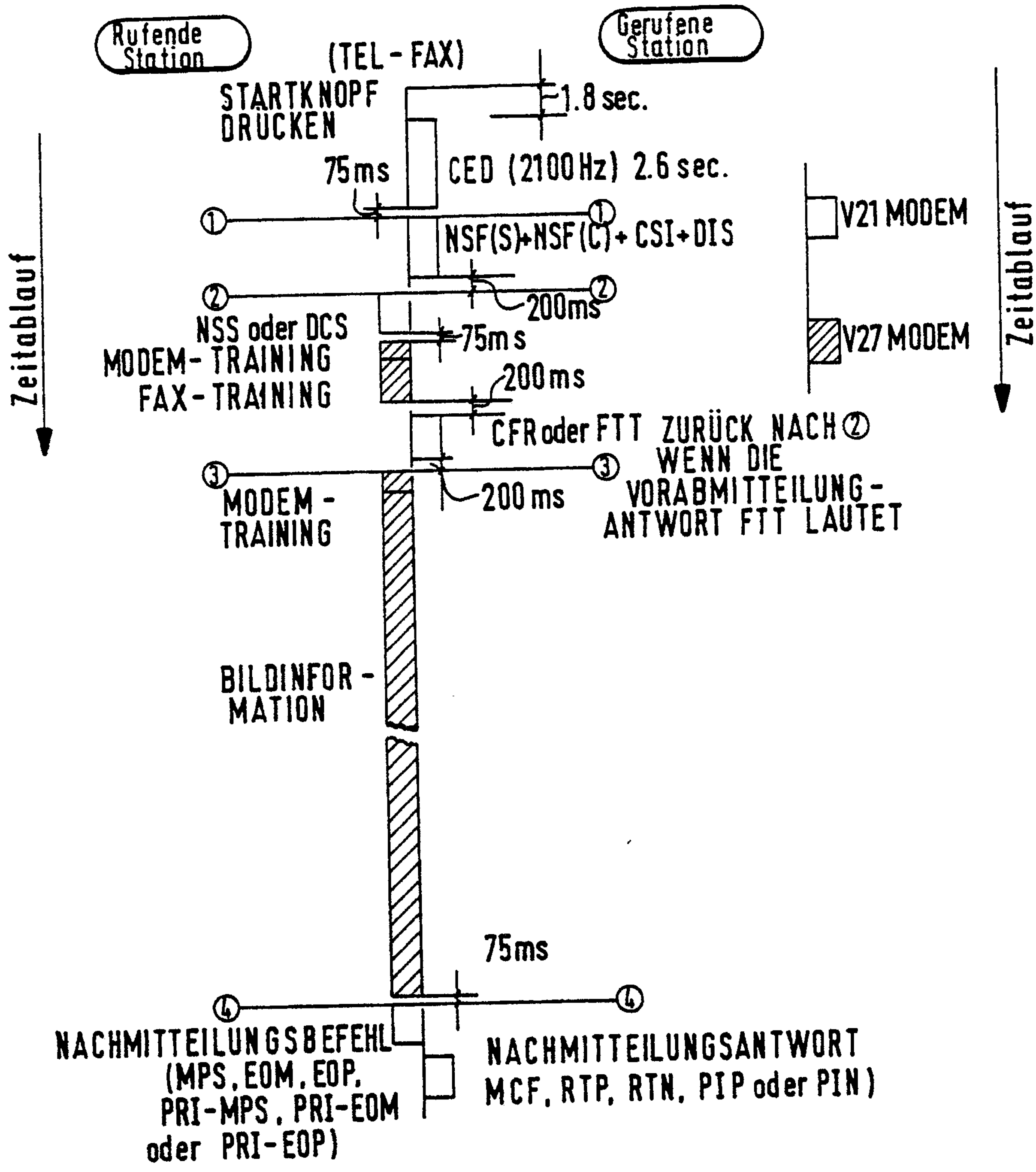
Rufende Station
Gerufene Station
(TEL - FAX)
STARTKNOPF DRÜCKEN
1.8 sec.
75ms
CED (2100Hz) 2.6 sec.
①
NSF(S)+NSF(C)+CSI+DIS
V21 MODEM
②
200ms
NSS oder DCS
75ms
MODEM-TRAINING
FAX-TRAINING
200ms
V27 MODEM
Zeitablauf
CFR oder FTT ZURÜCK NACH ② WENN DIE VORABMITTEILUNG-ANTWORT FTT LAUTET
③
200 ms
MODEM-TRAINING
BILDINFORMATION
75ms
④
NACHMITTEILUNGSBEFEHL (MPS, EOM, EOP, PRI-MPS, PRI-EOM oder PRI-EOP)
NACHMITTEILUNGSANTWORT MCF, RTP, RTN, PIP oder PIN)

FIG. 3

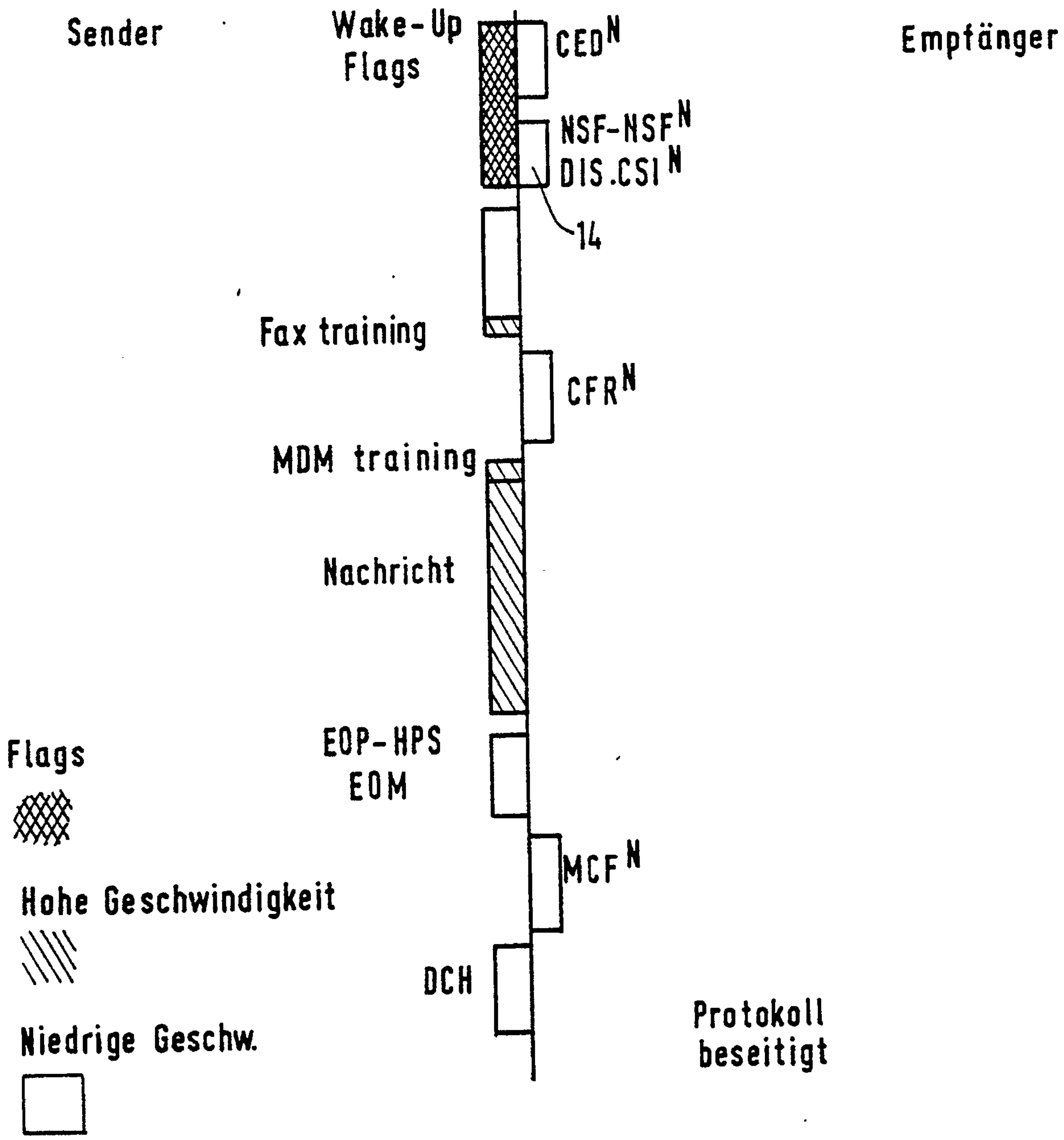

Sender
Wake-Up Flags
CED N
Empfänger
NSF-NSF N
DIS.CSI N
14
Fax training
CFR N
MDM training
Nachricht
EOP-HPS
EOM
Flags
MCF N
Hohe Geschwindigkeit
DCH
Protokoll beseitigt
Niedrige Geschw.


FIG.4

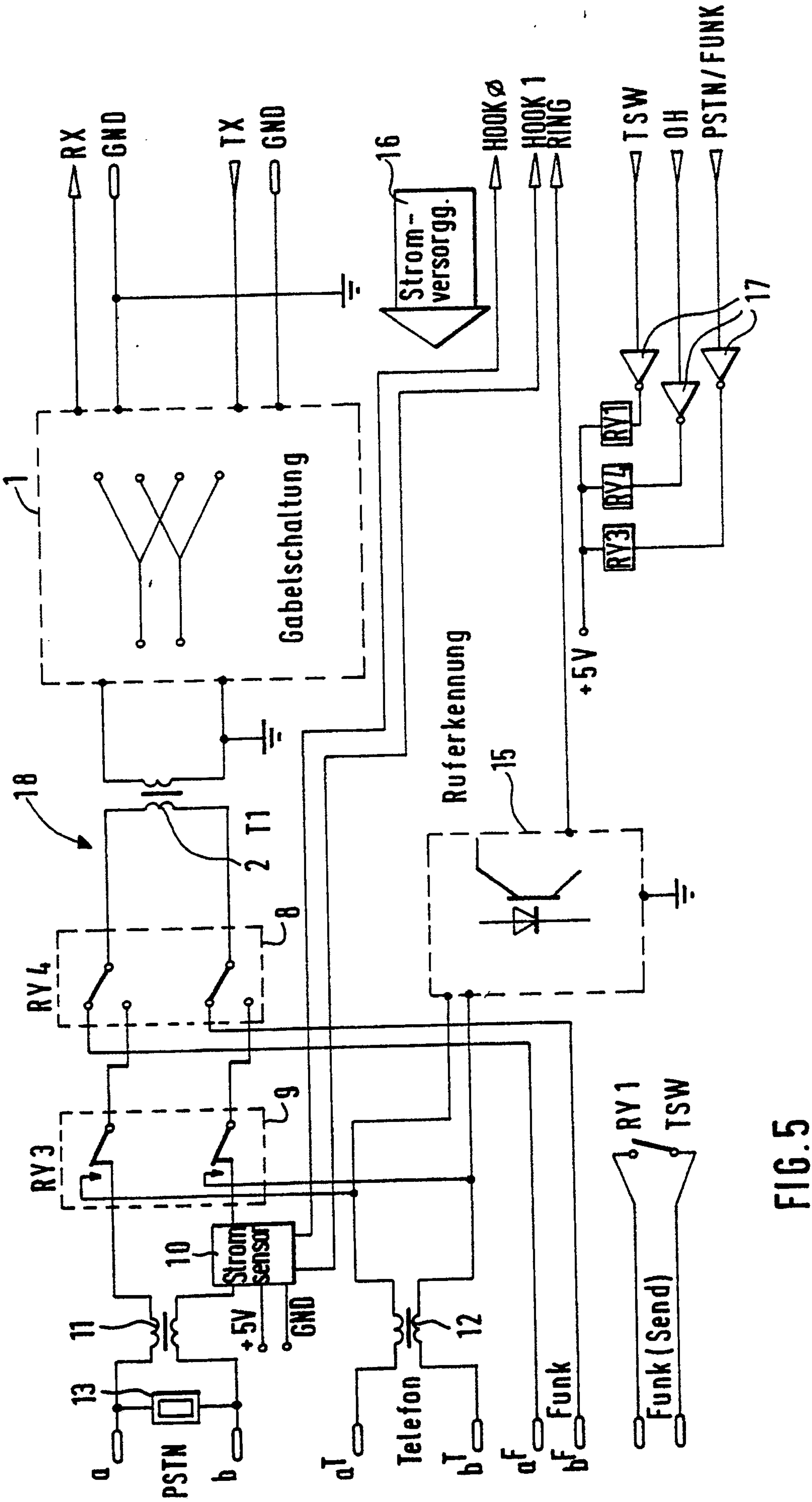
RX
GND
TX
GND
16
Strom-versorgg.
HOOK ⌀
HOOK 1
RING
TSW
OH
PSTN/FUNK
17
1
Gabelschaltung
18
2 T1
RV4
8
RV3
9
10
Strom Sensor
+5V
GND
11
12
13
Ruferkennung
15
+5V
RY3
RY4
RY1
RV1
TSW
a
PSTN
b
$a^T$
Telefon
$b^T$
$a^F$
Funk
$b^F$
Funk (Send)

FIG.5

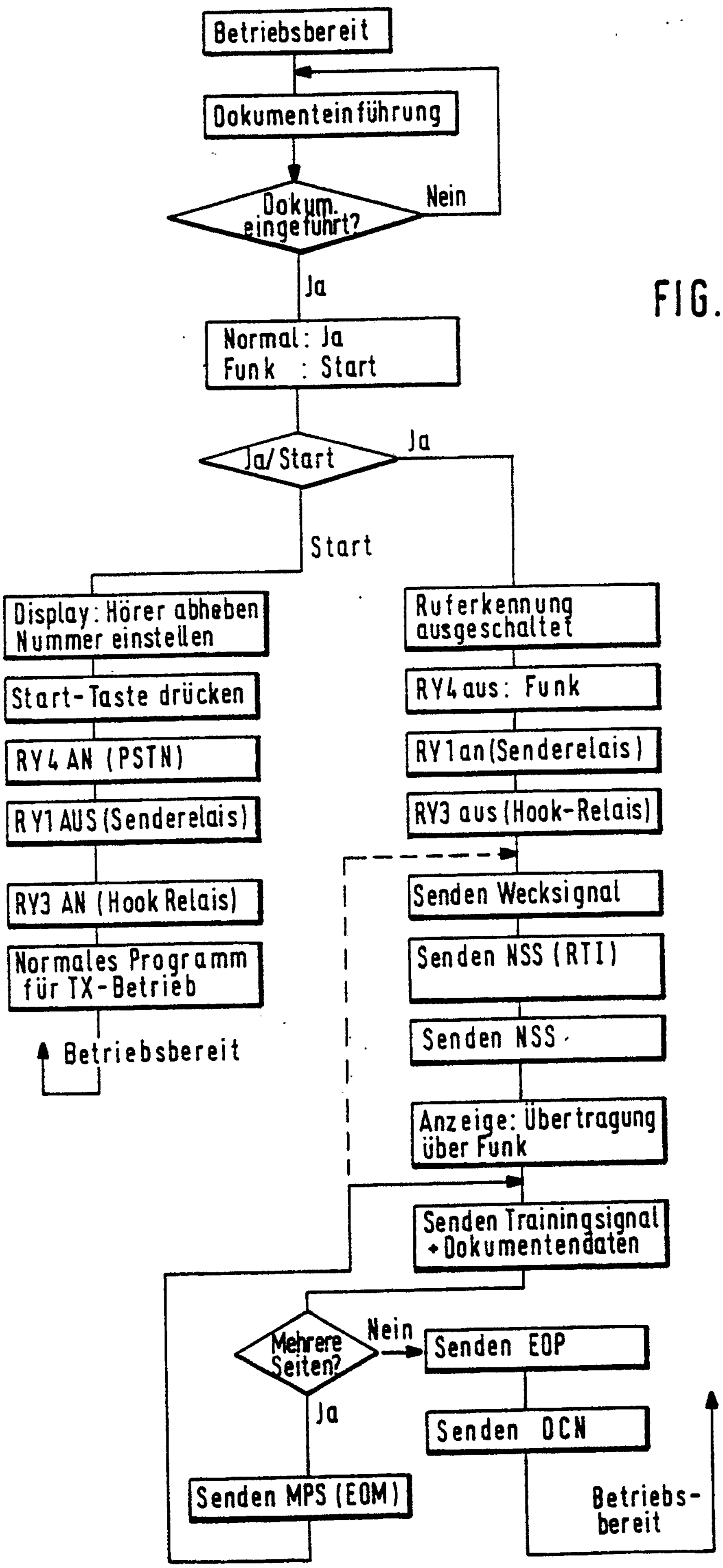
Betriebsbereit
Dokumenteinführung
Dokum. eingeführt?
Nein
Ja
Normal: Ja
Funk : Start
Ja/Start
Ja
Start
Display: Hörer abheben
Nummer einstellen
Start-Taste drücken
RY4 AN (PSTN)
RY1 AUS (Senderelais)
RY3 AN (Hook Relais)
Normales Programm
für TX-Betrieb
Betriebsbereit
Ruferkennung
ausgeschaltet
RY4 aus: Funk
RY1 an (Senderelais)
RY3 aus (Hook-Relais)
Senden Wecksignal
Senden NSS (RTI)
Senden NSS
Anzeige: Übertragung
über Funk
Senden Trainingsignal
+ Dokumentendaten
Mehrere Seiten?
Nein
Senden EOP
Senden DCN
Ja
Senden MPS (EOM)
Betriebs-
bereit

FIG. 6

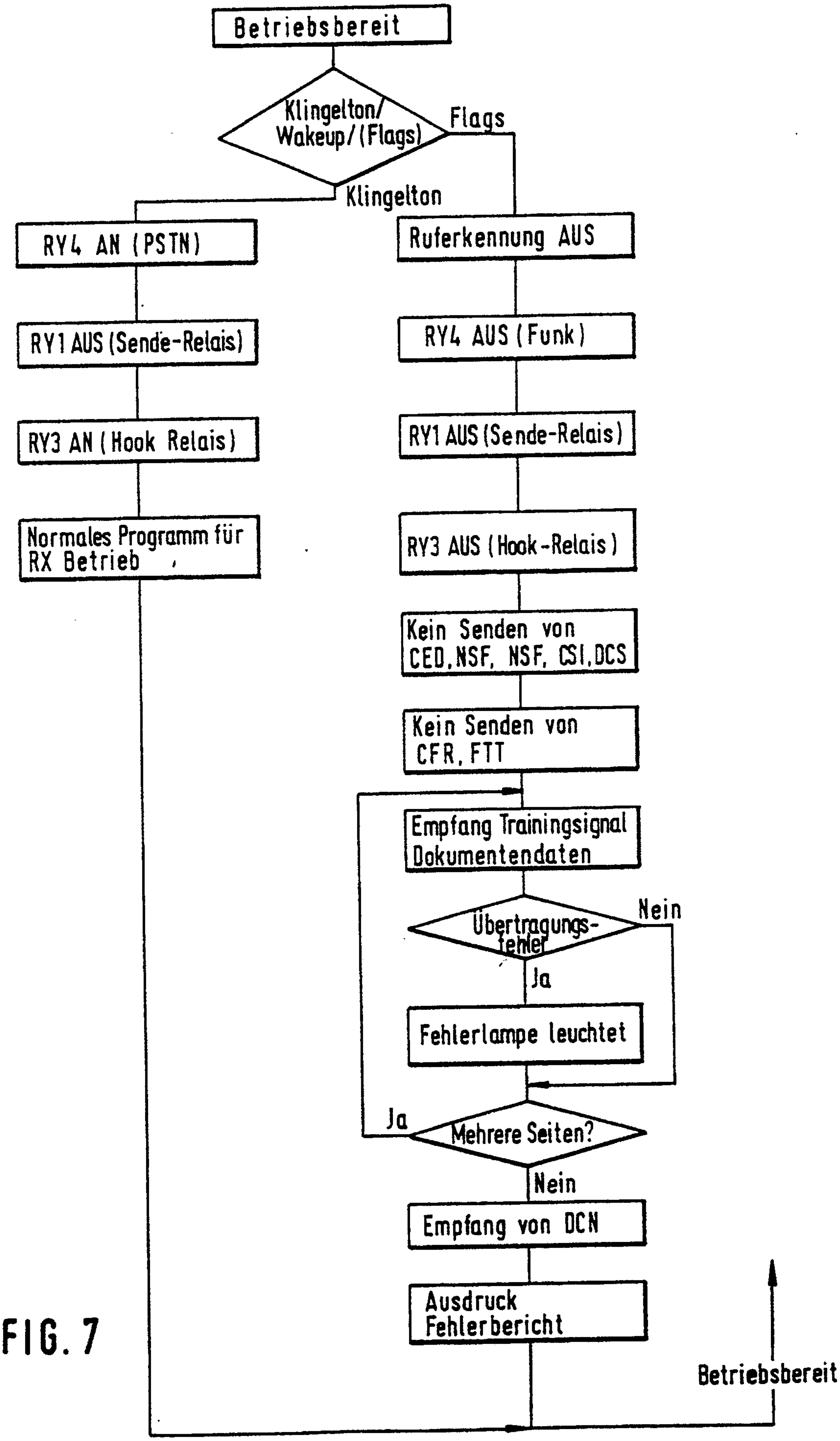
Betriebsbereit
Klingelton/ Wakeup/ (Flags)
Flags
Klingelton
RY4 AN (PSTN)
RY1 AUS (Sende-Relais)
RY3 AN (Hook Relais)
Normales Programm für RX Betrieb
Ruferkennung AUS
RY4 AUS (Funk)
RY1 AUS (Sende-Relais)
RY3 AUS (Hook-Relais)
Kein Senden von CED, NSF, NSF, CSI, DCS
Kein Senden von CFR, FTT
Empfang Trainingsignal Dokumentendaten
Übertragungs-fehler
Nein
Ja
Fehlerlampe leuchtet
Ja
Mehrere Seiten?
Nein
Empfang von DCN
Ausdruck Fehlerbericht
Betriebsbereit

FIG. 7